# EUROPÄISCHE PATENTSCHRIFT

(11) **EP 2 083 260 B1**
(45) Veröffentlichungstag und Bekanntmachung des Hinweises auf die Patenterteilung: **31.12.2014**
(21) Anmeldenummer: 09150421.7
(22) Anmeldetag: 13.01.2009
(51) Int. Cl.: G01N 21/88, G01N 21/95

(54) **Vorrichtung und Verfahren zur Untersuchung der Oberfläche eines Bauteils**
Component surface inspection method and device
Dispositif et procédé destinés à l'examen de la surface d'un composant

(30) Priorität: 22.01.2008 DE 102008005554
(43) Veröffentlichungstag der Anmeldung: 29.07.2009
(73) Patentinhaber: Rolls-Royce Deutschland Ltd & Co KG, 15827 Blankenfelde-Mahlow (DE)
(72) Erfinder: Baumgartner, Manfred, 14109, Berlin (DE)
(74) Vertreter: Gross, Felix

(56) Entgegenhaltungen:
- US-A1- 2002 089 298
- US-A1- 2006 236 769
- US-A1- 2007 089 545
- US-B2- 7 146 291

## Beschreibung

Die Erfindung bezieht sich auf eine Vorrichtung zum Untersuchen der Oberflächen der Schaufeln an der Blisk einer Gasturbine mittels einer Sondeneinrichtung, die mit einer Verfahreinrichtung verbunden ist und einen Sondenträger mit einem Messkopf aufweist. Ferner bezieht sich die Erfindung auf ein Verfahren zum Untersuchen der Oberflächen einer Schaufel einer Gasturbine mittels der vorgenannten Vorrichtung.

Zum Untersuchen der Oberflächen von Bauteilen, wie insbesondere der Schaufeln der Blisk einer Gasturbine, sind verschiedene Möglichkeiten bekannt. Die einfachste Möglichkeit ist die Sichtprüfung mit einem Mikroskop zum Auffinden von Oberflächendefekten. Zu diesem Zweck ist auch der Einsatz von Kameras bekannt. Des Weiteren sind Messgeräte, welche die Maße der Schaufel oder die Rauhtiefe der Oberfläche ermitteln, bekannt.

Insbesondere bei Schaufeln einer Gasturbine ist es wichtig, Öberflächendefekte aufzufinden. Oberflächendefekte können zum Beispiel durch Funkeneinschläge infolge von Funkenflug beim Schleifen der Schaufelspitzen entstehen ("Spatter"). Des Weiteren können Oberflächendefekte in Form von Kratzern, Ungenauigkeiten oder Kontamination auftreten. Diese Oberflächendefekte können im Betrieb Ausgangspunkte für Risse sein, die zu einem. Bauteilversagen führen können.

Bei herkömmlichen Schaufeln, die einzeln an einer Rotorscheibe montiert werden, wird jede Schaufel bei der Endkontrolle nach der Fertigung und vor der Montage einzeln vollständig mikroskopisch inspiziert.

Bei integraler Ausbildung von Schaufeln an einer Rotorscheibe in Form einer Blisk ist dies nicht möglich, denn die Schaufeln sind aus dem Vollmaterial herausgearbeitet. Die Schaufeln sind in diesem Fall dicht nebeneinander angeordnet und verdecken sich gegenseitig, so dass sie mit herkömmlichen Messgeräten und -verfahren (z.B. Mikroskope, Kameras) nur unzureichend geprüft werden können. Die enge Staffelung der Schaufeln an einer Blisk erlaubt also nicht, jede einzelne Schaufel vollständig mikroskopisch auf Oberflächendefekte zu inspizieren. Oberflächendefekte können daher nur in den zugänglichen Randbereichen aufgespürt werden. Die in den unzugänglichen Bereichen zwischen den Schaufeln liegenden Oberflächendefekte wurden bisher nicht untersucht und konnten fast nicht begutachtet werden, da es kein geeignetes Inspektionsverfahren gab. Das Erkennen von Oberflächendefekten in den schwer zugänglichen Bereichen erfolgte zum Teil nur zufällig. Dies bedeutet ein Risiko für den Betrieb und könnte zu Schäden wie Rissen oder zum vollständigen Versagen einer Schaufel führen.

Die US 6,907,358 B2 beschreibt ein Verfahren zur Untersuchung von Materialdefekten in Bauteilen mit Hilfe von Wirbelströmen. Dabei werden eine Sonde, die eine elektrische Spule aufweist, und ein Bauteil durch zwei mehrachsige Verfahreinrichtungen relativ zueinander bewegt. In der elektrischen Spule wird Wechselstrom erzeugt, der einen Wirbelstrom im Bauteil erzeugt. Die Sonde wird entlang der Oberfläche eines Bauteils bewegt und misst die Wechselwirkung zwischen dem elektromagnetischen Feld in der Spule und dem Bauteil. An Oberflächendefekten wird der Wirbelstrom gestört und der Erregerstrom in der Spule verändert. Jede Änderung erlaubt Rückschlüsse auf die Eigenschaften von Oberflächendefekten. Dieses Verfahren ist jedoch aufgrund der beiden mehrachsigen Verfahreinrichtungen sehr aufwendig. Die Vorrichtung liefert außerdem nur indirekt und erst nach einer Umrechnung der Wirbelstromwerte Auskünfte über die Oberflächendefekte.

Die US 7,146,291 B2 beschreibt eine Vorrichtung und ein Verfahren, mit denen die Geometrie einer Schaufel an einer Blisk computergesteuert gemessen werden kann. Dazu wird die Blisk zunächst auf einem Drehtisch befestigt. Eine Sonde mit einem Messkopf wird an die Schaufel herangefahren bis der Messkopf einen Kontakt erfährt. Anschließend wird ein Signal an einen Computer gesendet, der die Koordinaten des Messpunktes ermittelt. Der Messkopf wird anhand von CAD oder CAM-Daten entlang der Oberfläche des Bauteils bewegt und ermittelt so nacheinander eine erforderliche Anzahl von Messpunkten an der Blisk-oberfläche.

Die US 2003/0223082 A1 beschreibt eine Vorrichtung und ein Verfahren zum Messen einer Oberflächenkontur eines Bauteils mittels eines optischen Systems. Dazu wird das Bauteil in einem mit Flüssigkeit gefüllten Behälter untergebracht. Anschließend wird das Bauteil beleuchtet und das reflektierte Licht der Bauteiloberfläche mittels einer CCD-Kamera aufgenommen. Das vom Bauteil reflektierte Licht wird mit dem reflektierten Licht einer Referenzfläche verglichen. Es entsteht ein Graustufenbild, das dazu verwendet wird, eine topographische oder farblich abgestufte Ansicht der Oberflächenkontur zu erzeugen. Das Ergebnis ist eine vollständige Seitenansicht des Bauteils. Mit den Vorrichtungen und den Verfahren nach den beiden letztgenannten Dokumenten können keine Oberflächendefekte ermittelt werden. Die Vorrichtungen dienen ausschließlich dazu, die Abmessungen des Bauteils zu prüfen.

Aus US 2002/0089298 A1 ist eine Vorrichtung zur robotermässigen Inspektion der Bauteile einer Gasturbine vorbekannt, wobei ein stabförmiger Sondenträger in das Gehäuse der Gasturbine eingefahren werden kann, um mit Miniaturkameras verschiedene unzugängliche Bauteile der Gasturbine visuell zu untersuchen. Die Prüfung von Schaufeln der Blisk einer Gasturbine wird hier nicht erwähnt.

Aus US 2007/0089545 A1 ist es bekannt, die auf einen Rotor einer Gasturbine mittels schwalbenschwanzartiger Fussteile montierten Schaufeln mittels eines Sondenträgers visuell auf Oberflächenbeschädigungen zu inspizieren.

Aus US 2006/0236769 A1 ist es bekannt, die Oberflächen der Schaufeln, wie z. B. Fanschaufeln, einer Gasturbine mittels eines aus Sender und Empfänger bestehenden Ultraschall-Erkennungssystems zu inspizieren. Dabei befinden sich Sender und Empfänger in einem Rahmen von großen Abmessungen, die eine Inspektion der Schaufeln einer hier nicht erwähnten Blisk nicht ermöglichen.

Der Erfindung liegt die Aufgabe zugrunde, eine Vorrichtung und ein Verfahren zu schaffen, die gut geeignet sind, in den nur eingeschränkt zugänglichen Zwischenräumen zwischen den Schaufeln der Blisk einer Gasturbine die Oberflächen der Schaufeln auf im Betrieb entstandene Beschädigungen zu untersuchen.

Die Lösung dieser Aufgabe ergibt sich aus den kennzeichnenden Merkmalen des neuen Vorrichtungsanspruches 1 und des neuen Verfahrensanspruches 6. Vorteilhafte Ausgestaltungen der Erfindung sind in den jeweils zugehörigen Unteransprüchen enthalten.

Die erfindungsgemäße Vorrichtung kann mit ihren parallel zueinander angeordneten beiden Sondenträgern leicht in die engen Zwischenräume zwischen zwei benachbarten Schaufeln einer Blisk eingeführt werden, wobei die beiden Sondenträger eine gleichzeitige Untersuchung der gegenüberliegenden Oberflächen einer Schaufel der Blisk ermöglichen.

Die Erfindung umfasst eine Vorrichtung zum Untersuchen der Oberflächen der Schaufeln der Blisk einer Gasturbine mittels einer Sondeneinrichtung, die mit einer Verfahreinrichtung gekoppelt ist und zwei stabförmig ausgebildete Sondenträger aufweist, an denen Bildaufnahmeeinheiten angebracht sind. Durch diese kann eine mikroskopisch genaue Abbildung der Oberflächendefekte einer Schaufel.erzeugt werden. Die Oberflächendefekte können daraufhin nachbearbeitet werden. Dies erhöht die Betriebssicherheit. Die Öberflächendefekte können jedoch jederzeit, d.h. auch während des Betriebs, auftreten und bei einer Wartung mit Hilfe der Vorrichtung festgestellt werden. Dies senkt die Wartungskosten, wenn kostenintensive Bauteile nicht auf Verdacht ausgetauscht werden müssen, und erhöht die Betriebssicherheit mit allen menschlichen und finanziellen Konsequenzen im Fall eines Schadens.

Insbesondere sind die Bildaufnahmeeinheiten digitale Bildaufnahmeeinheiten, die eine Weiterverarbeitung der Bilddaten in elektronischer Form ermöglichen und die jeweils um eine Achse drehbar sind. Dadurch können sowohl die Rundungsradien, wie z.B. am Übergang zwischen Schaufel und Scheibe, die besonders hohen Spannungen ausgesetzt sind, als auch die typischerweise gekrümmten Oberflächen bei Schaufeln optimal untersucht werden.

Ferner sind die Sondenträger schmaler als der Abstand zwischen zwei benachbarten Schaufeln ausgebildet. Durch diese Eigenschaft können die Sondenträger insbesondere in enge Zwischenräume zwischen zwei Schaufeln einer Blisk eingeführt werden und die dort vorhandenen Oberflächen untersuchen. Weiterhin sind die die Bildaufnahmeeinheiten jeweils an einem von der Verfahreinrichtung abgewandten Ende eines Sondenträgers angebracht. Diese Ausgestaltung ist einfach herzustellen und ist gut geeignet, in enge Zwischenräume eingeführt zu werden, um die dort vorhandenen Oberflächen zu untersuchen. Insbesondere kann eine der Bildaufnahmeeinheiten an der Stirnseite des Endes einer der Sondenträger angeordnet sein, so dass z.B. der Boden eines Zwischenraums untersucht werden kann (z.B. beim Service).

Dabei sind zwei Sondenträger parallel angeordnet, wobei der Abstand der Sondenträger größer als die Dicke der Schaufeln und jeder Sondenträger schmaler als der Abstand zwischen benachbarten Schaufeln ist. Die beiden parallelen Sondenträger ermöglichen eine gleichzeitige Untersuchung zweier Oberflächen, die in den engen Zwischenräumen zwischen zwei Schaufeln liegen.

Insbesondere kann je eine Bildaufnahmeeinheit an den einander zugewandten Seiten der Sondenträger angebracht sein. Durch diese Anordnung können zwei gegenüberliegende Oberflächen gleichzeitig untersucht werden.

Auch ist der Abstand mindestens eines Sondenträgers zur Schaufel einstellbar. Durch die Einstellbarkeit können auch solche Schaufeln gut untersucht werden, deren Dicke entlang des Verfahrwegs der Sondenträger stark variiert.

Insbesondere ist an jedem Sondenträger ein Abstandssensor angebracht, der eine Überwachung des Abstands zwischen der Bildaufnahmeeinheit und der Schaufel ermöglicht, wodurch eine gleich bleibende Entfernung von der Schaufel eingestellt und Kollisionen vermieden werden können.

Weiterhin können im Sondenträger Leitungen untergebracht sein, die die Bildaufnahmeeinheit mit einem Rekorder verbinden, der mit einer Bildauswerteeinheit verbunden ist. Das Unterbringen der Leitungen im Sondenträger verhindert, dass die Leitungen beschädigt werden können. Der Rekorder und die Bildauswerteeinheit dienen zur Weiterverarbeitung der von der Bildaufnahmeeinheit aufgenommenen Bilddaten.

Alternativ dazu kann der Sondenträger mindestens einen Datensender aufweisen. Eine drahtlose Übertragung der Daten mittels des Datensenders ist eine Platz sparende Möglichkeit, die insbesondere auch das konstruktive Problem zwischen dem sich um die eigene Achse drehenden Sondenträger und der außen festen Datenleitung umgeht. Dazu ist hinter der Bildaufnahmeeinheit ein Miniatur-Datensender geschaltet, der die Daten zum Rekorder funkt. Vorzugsweise ist an dem Sondenträger mindestens ein Beleuchtungsmittel angebracht. Das Beleuchtungsmittel ermöglicht eine Beleuchtung von Oberflächenabschnitten, die bei einer externen Beleuchtung im Schatten liegen würden.

Die Vorrichtung eignet sich besonders für eine Verwendung zur Untersuchung der Oberfläche eines Bauteils mit eingeschränkter Zugänglichkeit, wie es bei den Schaufeln der Blisk einer Gasturbine der Fall ist.

Weiterhin besteht die Lösung der Aufgabe in einem Verfahren zum Untersuchen der Oberflächen der Schaufeln einer Blisk einer Gasturbine mittels der erfindungsgemäßen Vorrichtung. Die Bildaufnahmeeinheiten nehmen Bilddaten von den Oberflächen der Schaufeln auf und leiten die Bilddaten an einen Rekorder weiter, der die Bilddaten speichert und an eine Bildauswerteeinheit weiterleitet. Auf diese Weise können die Bilddaten gespeichert, weiterverarbeitet und ausgewertet werden.

Insbesondere kann der Datensender die Bilddaten drahtlos von der Bildaufnahmeeinheit an den Rekorder leiten. Die drahtlose Übertragung der Daten spart Leitungen ein und umgeht das konstruktive Problem zwischen dem sich um die eigene Achse drehenden Sondenträger und der außen festen Datenleitung.

Vorzugsweise findet die Bildauswerteeinheit Oberflächendefekte der Schaufeln automatisch auf. Dies ermöglicht eine schnelle Untersuchung der Oberflächen der Schaufeln.

Außerdem kann die Bildauswerteeinheit die Lage der Oberflächendefekte in Form von räumlichen Koordinaten speichern und/oder anzeigen. Die Definition der Koordinate Vorzugsweise erfolgt die Aufnahme der Bilddaten kontinuierlich, d.h. die Oberfläche des Bauteils wird gescannt.

Im Folgenden wird ein Ausführungsbeispiel der Erfindung anhand von zwei Figuren näher erläutert. Es zeigen:
- Figur 1: eine schematische Darstellung der Vorrichtung und
- Figur 2: eine schematische Darstellung der Sondeneinrichtung.

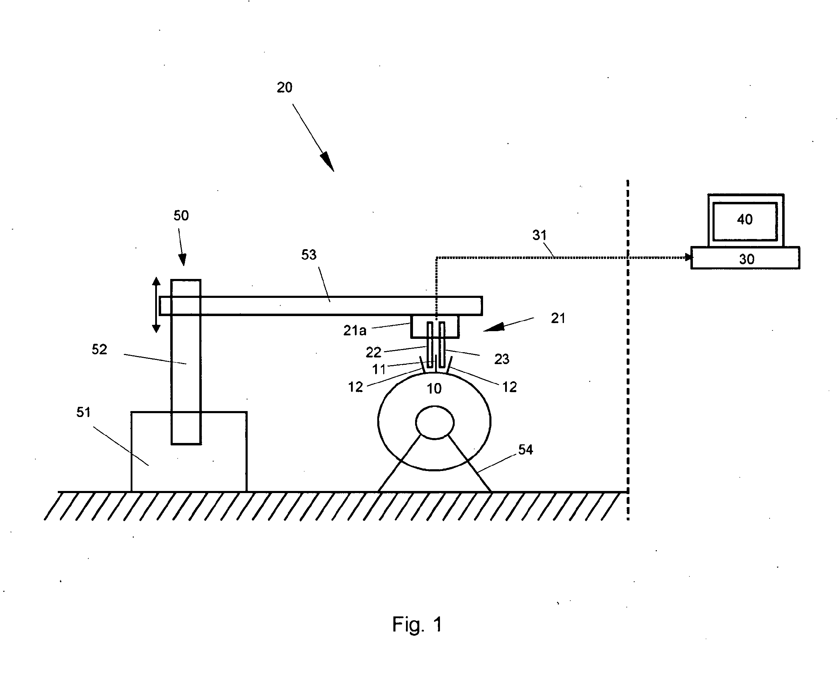

Figur 1 zeigt die Vorrichtung 20, die eine Verfahreinrichtung 50, eine Sondeneinrichtung 21, eine Aufnahmevorrichtung 54, einen Rekorder 30 und eine Bildauswerteeinheit 40 umfasst. Des Weiteren zeigt die Figur 1 eine Blisk 10 mit einer zu untersuchenden Schaufel 11 und zwei benachbarten Schaufeln 12.

Die Verfahreinrichtung 50 ist programmgesteuert und umfasst einen Verfahrantrieb 51, einen vertikalen Träger 52 und einen horizontalen Träger 53. Der horizontale Träger 53 ist entlang des vertikalen Trägers 52 beweglich angebracht. Am Ende des horizontalen Trägers 53 befindet sich die Sondeneinrichtung 21.

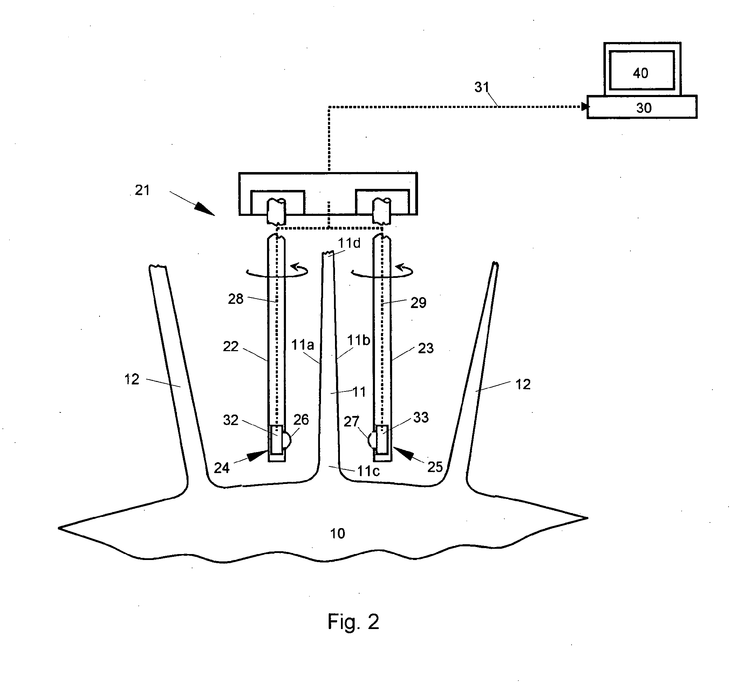

Die Sondeneinrichtung 21 weist eine Antriebseinheit 21a für einen ersten Sondenträger 22 und einen zweiten Sondenträger 23 auf und ist in Fig. 2 vergrößert dargestellt. Die Sondenträger umfassen in Fig. 2 dargestellte Bildaufnahmeeinheiten 26 und 27, an die Datenleitungen 28 und 29 angeschlossen sind, die mit der Datenleitung 31 verbunden sind. Die Datenleitung 31 führt zum Rekorder 30. Der Rekorder 30 ist über eine weitere, nicht dargestellte Datenleitung mit der Bildauswerteeinheit 40 verbunden.

Die Aufnahmevorrichtung 54 weist die Form eines Lagerbocks auf. Die Blisk 10 befindet sich in der Aufnahmevorrichtung 54, wobei sich die Schaufel 11 in einer senkrechten, nach oben zeigenden Position befindet. Die Figur 2 zeigt einen Teil der Blisk 10. Weiterhin sind die Sondeneinrichtung 21, der Rekorder 30 und die Bildauswerteeinheit 40 der Vorrichtung 20 dargestellt.

Die Blisk 10 umfasst integral ausgebildete, radial angeordnete Schaufeln 11 und 12. Die untersuchte Schaufel 11 weist eine erste Oberfläche 11a und eine zweite Oberfläche 11b auf. Die erste Oberfläche 11a und die zweite Oberfläche 11b liegen einander gegenüber und bilden zusammen ein Strömungsprofil. Weiterhin weist die Schaufel 11 ein Ende 11c, das an der Blisk 10 radial innen liegt, und ein Ende 11d auf, das radial nach außen zeigt. Die übrigen Schaufeln 12 weisen die gleiche Form auf wie die Schaufel 11.

Die Sondeneinrichtung 21 umfasst die Antriebseinheit 21a, den ersten Sondenträger 22 mit der ersten Bildaufnahmeeinheit 26 (Sonde) und der ersten Datenleitung 28 und den zweiten Sondenträger 23 mit der zweiten Bildaufnahmeeinheit 27 (Sonde) und der zweiten Datenleitung 29. Alternativ zu den beiden Datenleitungen 28 und 29 können ein erster Datensender 32 in den ersten Sondenträger 22 und ein zweiter Datensender 33 in den zweiten Sondenträger 23 integriert sein

Der erste Sondenträger 22 und der zweite Sondenträger 23 der Sondeneinrichtung 21 sind stabförmig und parallel zu einander angeordnet. Die Länge der Sondenträger 22, 23 ist größer als die Länge der Schaufeln 11, 12. Die Bildaufnahmeeinheiten 26 und 27 sind als Miniaturscanköpfe oder Fotozellen mit starker Vergrößerung und hoher Auflösung zum Messen von Oberflächendefekten im Bereich von 0,01 mm ausgebildet.

Die erste Bildaufnahmeeinheit 26 ist an einem dem Schaufelende 11c zugewandten Ende 24 des ersten Sondenträgers 22 angeordnet und zeigt in Richtung der Oberfläche 11a der Schaufel 11. Die erste Bildaufnahmeeinheit 26 ist mit der ersten Datenleitung 28 verbunden. Ein Teil der ersten Datenleitung 28 ist in Längsrichtung im Innern des stabförmigen Sondenträgers 22 angeordnet. Die erste Datenleitung 28 verbindet die erste Bildaufnahmeeinheit 26 mit der Datenleitung 31 des Rekorders 30. Alternativ zur ersten Datenleitung 28 kann der erste Datensender 32 mit der ersten Bildaufnahmeeinheit 26 verbunden sein.

Die zweite Bildaufnahmeeinheit 27 ist an einem dem Schaufelende 11c zugewandten Ende 25 des zweiten Sondenträgers 23 angeordnet und zeigt in Richtung der Oberfläche 11b der Schaufel 11. Die zweite Bildaufnahmeeinheit 27 ist mit der zweiten Datenleitung 29 verbunden. Ein Teil der zweiten Datenleitung 29 ist in Längsrichtung im Innern des stabförmigen Sondenträgers 23 angeordnet. Die zweite Datenleitung 29 verbindet die zweite Bildaufnahmeeinheit 27 mit dem Rekorder 30. Alternativ zur zweiten Datenleitung 29 kann der zweite Datensender 33 mit der zweiten Bildaufnahmeeinheit 27 verbunden sein.

Die Datenleitungen 28 und 29 sind über eine Datenleitung 31 mit dem Rekorder 30 verbunden. Bei Verwendung der Datensender 32, 33 ist die Datenleitung 31 entbehrlich. Die Bildauswerteeinheit 40 der Vorrichtung 20 umfasst ein Bildauswerteprogramm und ist über eine nicht dargestellte Datenleitung mit dem Rekorder 30 verbunden.

Vor der Untersuchung der Oberflächendefekte der Schaufel 11 durch die Sondeneinrichtung 21 wird die Blisk 10 in die Aufnahmevorrichtung 54 eingesetzt und die Schaufel 11 in eine nach oben zeigende senkrechte Position gebracht (vgl. Fig. 1). Anschließend bewegt der Verfahrantrieb 51 den horizontalen Träger 53 entlang des vertikalen Trägers 52 und bringt so die am Ende des horizontalen Trägers 53 angebrachte Sondeneinrichtung 21 mit den Sondenträgern 22 und 23 programmgesteuert in eine Anfangsposition.

Die Anfangsposition der Sondenträger 22 und 23 kann zum Beispiel an der Schaufelvorderkante am radial innen liegenden Ende 11c der Schaufel 11 sein. Dabei befinden sich die Sondenträger 22 und 23 der Sondeneinrichtung 21 in den Bereichen zwischen der Schaufel 11 und den benachbarten Schaufeln 12. Die beiden Sondenträger 22 und 23 ermöglichen somit eine Untersuchung der schwer zugänglichen Oberflächen 11a und 11b. Die Antriebseinheit 21a ermöglicht eine Rotation der Sondenträger 22 und 23 um ihre eigenen Achsen.

Von der Anfangsposition aus werden die Bildaufnahmeeinheiten 26 und 27 in den Sondenträgern 22 und 23 zuerst in Querrichtung von der Schaufelvorderkante bis zur Schaufelhinterkante bewegt, d.h. in die Bildebene hinein bzw. aus der Bildebene heraus. Dabei scannen die erste Bildaufnahmeeinheit 26 einen Streifen der ersten Oberfläche 11a und die zweite Bildaufnahmeeinheit 27 einen Streifen der zweiten Oberfläche 11b. Wenn die Sonde 21 die hintere Schaufelkante erreicht hat, wird sie um die Breite des gescannten Streifens radial nach außen und dann wieder von der Schaufelhinterkante zur Schaufelvorderkante bewegt. Dabei wird jeweils ein weiterer Streifen der Oberflächen 11a und 11b von den Bildaufnahmeeinheiten 26 und 27 gescannt. Von dort aus werden die Bildaufnahmeeinheiten 26 und 27 wieder um die Breite des gescannten Streifens radial nach außen bewegt.

Diese Bewegungen der Bildaufnahmeeinheiten 26 und 27 in den Sondenträgern 22 und 23 werden so lange wiederholt, bis die Bildaufnahmeeinheiten 26 und 27 das radial äußere Ende 11d der Schaufel 11 erreicht haben und die gesamten Oberflächen 11a und 11b gescannt worden sind. Die Bewegungen der Sondenträger 22 und 23 sind jeweils auf die vorliegende Form der Oberflächen 11a und 11b abgestimmt und können anhand von CAD-Daten ermittelt werden.

Ein Abstandssensor kann für einen gleich bleibenden Abstand der Bildaufnahmeeinheiten 26 und 27 zu den Oberflächen 11a und 11b sorgen. Außerdem können nicht dargestellte Beleuchtungsmittel an der Sonde für eine gute Beleuchtung beim Scannen sorgen.

Die von der ersten Bildaufnahmeeinheit 26 aufgenommenen Bilddaten werden über die erste Datenleitung 28 und die Datenleitung 31 oder über drahtlose Übermittlung (z.B. Wireless LAN) 31 mittels des ersten Datensenders 32 zum Rekorder 30 geleitet. Die von der zweiten Bildaufnahmeeinheit 27 aufgenommenen Bilddaten werden über die zweite Datenleitung 29 und die Datenleitung 31 oder über drahtlose Übermittlung (z.B. Wireless LAN) mittels des zweiten Datensenders 33 zum Rekorder 30 geleitet.

Im Rekorder 30 werden die Bilddaten zwischengespeichert. Nach dem Zwischenspeichern werden die Bilddaten über die nicht dargestellte Datenleitung an die Bildauswerteeinheit 40 weitergeleitet. Das Bildauswerteprogramm der Bildauswerteeinheit findet anhand der Bilddaten automatisch Defekte in den Oberflächen 11a und 11b auf. Die Bilddaten können z.B. mit einer Skalierung bzw. einem Maßstab versehen sein und räumliche Koordinaten anzeigen.

### Bezugszeichenliste

- 10: Blisk
- 11: Schaufel
- 11a: erste Oberfläche
- 11b: zweite Oberfläche
- 11c: Ende
- 11d: Ende
- 12: Schaufel

- 20: Vorrichtung
- 21: Sondeneinrichtung
- 21a: Antriebseinheit
- 22: erster Sondenträger
- 23: zweiter Sondenträger
- 24: Ende
- 25: Ende
- 26: erste Bildaufnahmeeinheit
- 27: zweite Bildaufnahmeeinheit
- 28: erste Datenleitung
- 29: zweite Datenleitung

- 30: Rekorder
- 31: Datenleitung
- 32: erster Datensender
- 33: zweiter Datensender

- 40: Bildauswerteeinheit

- 50: Verfahreinrichtung
- 51: Verfahrantrieb
- 52: Träger
- 53: Träger
- 54: Aufnahmevorrichtung

## Patentansprüche

1. Vorrichtung zum gleichzeitigen Untersuchen von zwei gegenüberliegenden Oberflächen (11a, 11b) der Schaufeln (12) an der Blisk (10) einer Gasturbine mittels einer Sondeneinrichtung (21), die mit einer Verfahreinrichtung (50) gekoppelt ist und einen Sondenträger (22, 23) mit einem Messkopf aufweist,
**dadurch gekennzeichnet,**
**dass** zwei stabförmig ausgebildete Sondenträger (22, 23) parallel zueinander angeordnet sind,
**dass** der Abstand der Sondenträger (22, 23) zu den Schaufeln einstellbar ist und der Abstand der Sondenträger (22, 23) größer als die Dicke der Schaufeln (12) der Blisk (10) ist,
**dass** jeder Sondenträger (22, 23) schmaler als der Abstand zwischen benachbarten Schaufeln (12) der Blisk (10) ist und
**dass** an den von der Verfahreinrichtung (50) abgewandten Enden (24, 25) und den einander zugewandten Seiten der Sondenträger (22, 23) um jeweils eine Achse drehbare, den jeweiligen Messkopf bildende, digitale Bildaufnahmeeinheiten (26, 27) angebracht sind.

2. Vorrichtung nach Anspruch 1, **dadurch gekennzeichnet, dass** an jedem Sondenträger (22, 23) ein Abstandssensor angebracht ist.

3. Vorrichtung nach Anspruch 1 oder 2, **dadurch gekennzeichnet, dass** in jedem Sondenträger (22, 23) Leitungen (28, 29) untergebracht sind, welche die Bildaufnahmeeinheit (26, 27) mit einem Rekorder (30) verbinden, der mit einer Bildauswerteeinheit (40) verbunden ist.

4. Vorrichtung nach Anspruch 1 oder 2, **dadurch gekennzeichnet, dass** jeder Sondenträger (22, 23) einen Datensender (32, 33) aufweist.

5. Vorrichtung nach einem der Ansprüche 1 bis 4, **dadurch gekennzeichnet, dass** an jedem Sondenträger (22, 23) ein Beleuchtungsmittel angebracht ist.

6. Verfahren zum gleichzeitigen Untersuchen von zwei gegenüberliegenden Oberflächen (11a, 11b) der Schaufeln (12) an der Blisk (10) einer Gasturbine mittels einer Vorrichtung nach einem der Ansprüche 1 bis 5, **dadurch gekennzeichnet, dass** jede Bildaufnahmeeinheit (26, 27) Bilddaten von der jeweiligen Oberfläche (11a, 11b) der Schaufeln (12) aufnimmt und die Bilddaten an einen Rekorder (30) leitet, der die Bilddaten speichert und an eine Bildauswerteeinheit (40) weiterleitet.

7. Verfahren nach Anspruch 6, **dadurch gekennzeichnet, dass** der Datensender (32, 33) die Bilddaten drahtlos von der Bildaufnahmeeinheit (26, 27) an den Rekorder (30) leitet.

8. Verfahren nach Anspruch 6 oder 7, **dadurch gekennzeichnet, dass** die Bildauswerteeinheit (40) Oberflächendefekte der Schaufeln (12) automatisch auffindet.

9. Verfahren nach Anspruch 8 **dadurch gekennzeichnet, dass** jede Bildauswerteeinheit (40) die Lage der Oberflächendefekte der Schaufeln (12) in Form von räumlichen Koordinaten speichert und/oder anzeigt.

10. Verfahren nach einem der Ansprüche 7 bis 9, **dadurch gekennzeichnet, dass** die Aufnahme der Bilddaten kontinuierlich erfolgt.

## Claims

1. Apparatus for the simultaneous inspection of two opposing surfaces (11a, 11b) of the blades (12) on the BLISK (10) of a gas turbine by means of a probing device (21) which is coupled to a traversing device (50) and has a probe carrier (22, 23) with a measuring head,
**characterized in that**
two rod-shaped probe carriers (22, 23) are arranged parallel to one another,
the distance of the probe carriers (22, 23) to the blades is adjustable and the distance of the probe carriers (22, 23) exceeds the thickness of the blades (12) of the BLISK (10),
each probe carrier (22, 23) is smaller than the distance between adjacent blades (12) of the BLISK (10), and that
digital image pick-up units (26, 27) forming the respective measuring head and being rotatable about one each axis are fitted at the ends (24, 25) facing away from the traversing device (50) and on the sides of the probe carriers (22, 23) facing each other.

2. Apparatus in accordance with Claim 1, **characterized in that** a distance sensor is attached to each probe carrier (22, 23).

3. Apparatus in accordance with Claim 1 or 2, **characterized in that** lines (28, 29) are accommodated in each probe carrier (22, 23), which connect the image pick-up unit (26, 27) with a recorder (30) connected to an image analyzing unit (40).

4. Apparatus in accordance with Claim 1 or 2, **characterized in that** each probe carrier (22, 23) is provided with a data transmitter (32, 33).

5. Apparatus in accordance with one of the Claims 1 to 4, **characterized in that** an illuminant is arranged on each probe carrier (22, 23).

6. Method for the simultaneous inspection of two opposing surfaces (11a, 11 b) of the blades (12) on the BLISK (10) of a gas turbine by means of an apparatus in accordance with one of the Claims 1 to 5, **characterized in that** each image pick-up unit (26, 27) picks up image data from the respective surface (11a, 11b) of the blades (12) and feeds the image data to a recorder (30), where they are stored and forwarded to an image analyzing unit (40).

7. Method in accordance with Claim 6, **characterized in that** the data transmitter (32, 33) feeds the image data from the image pick-up unit (26, 27) to the recorder (30) by way of wireless transmission.

8. Method in accordance with Claim 6 or 7, **characterized in that** the image analyzing unit (40) automatically detects defects in the surface of the blades (12).

9. Method in accordance with Claim 8, **characterized in that** each image analyzing unit (40) stores and/ or indicates the position of the surface defects of the blades (12) in the form of three-dimensional coordinates.

10. Method in accordance with one of the Claims 7 to 9, **characterized in that** the image data are picked up continuously.

## Revendications

1. Appareil destiné à l'inspection simultanée de deux surfaces opposées (11a, 11b) des aubes (12) sur le BLISK (10) d'une turbine à gaz, au moyen d'un dispositif sondeur (21) qui est couplé à un dispositif de déplacement (50) et présente un support de sonde (22, 23) avec une tête de mesure,
**caractérisé en ce**
**que** deux supports de sonde (22, 23) en forme de barre sont disposés parallèlement l'un à l'autre,
**que** la distance des supports de sonde (22, 23) aux aubes est réglable et la distance des supports de sonde (22, 23) est supérieure à l'épaisseur des aubes (12) du BLISK (10),
**que** chaque support de sonde (22, 23) a une épaisseur inférieure à la distance entre des aubes (12) voisines du BLISK (10) et
**qu'**aux extrémités (24, 25) opposées au dispositif de déplacement (50) et sur les côtés se faisant face des supports de sonde (22, 23) sont disposées des unités de prise de vues (26, 27) numériques pouvant tourner autour d'un axe et formant la tête de mesure respective.

2. Appareil selon la revendication n° 1, **caractérisé en ce qu'**un capteur de distance est fixé à chaque support de sonde (22, 23).

3. Appareil selon la revendication n° 1 ou n° 2, **caractérisé en ce que** dans chaque support de sonde (22, 23) sont insérées des lignes (28, 29) qui relient l'unité de prise de vues (26, 27) à un enregistreur (30), lequel est relié à une unité d'analyse d'images (40).

4. Appareil selon la revendication n° 1 ou n° 2, **caractérisé en ce que** chaque support de sonde (22, 23) est pourvu d'un émetteur de données (32, 33).

5. Appareil selon une des revendications n° 1 à n° 4, **caractérisé en ce qu'**un luminaire est fixé à chaque support de sonde (22, 23).

6. Procédé destiné à l'inspection simultanée de deux surfaces opposées (11a, 11b) des aubes (12) sur le BLISK (10) d'une turbine à gaz, au moyen d'un appareil selon une des revendications n° 1 à n° 5, **caractérisé en ce que** chaque unité de prise de vues (26, 27) capte des données-image de la surface respective (11a, 11b) des aubes (12) et achemine les données-image jusqu' à un enregistreur (30) qui stocke les données-image et les transmet à une unité d'analyse d'images (40).

7. Procédé selon la revendication n° 6, **caractérisé en ce que** l'émetteur de données (32, 33) achemine sans fil les données-image depuis l'unité de prise de vues (26, 27) jusqu'à l'enregistreur (30).

8. Procédé selon la revendication n° 6 ou n° 7, **caractérisé en ce que** l'unité d'analyse d'images (40) détecte automatiquement des défauts de surface des aubes (12).

9. Procédé selon la revendication n° 8, **caractérisé en ce que** chaque unité d'analyse d'images (40) stocke et/ ou affiche la position des défauts de surface des aubes (12) sous forme de coordonnées à trois dimensions.

10. Procédé selon une des revendications n° 7 à n° 9, **caractérisé en ce que** le captage des données-image a lieu en continu.
